# EUROPEAN PATENT APPLICATION

(11) **EP 1 681 093 A1**
(43) Date of publication of application: **19.07.2006**
(21) Application number: 05425002.2
(22) Date of filing: 05.01.2005
(51) Int. Cl.: B01J 19/18, C07C 47/04

(54) **Automated device for formalin production**

(71) Applicant: Ferrari, Tiziana, 40033 Casalecchio di Reno (BO) (IT)
(72) Inventor: Ferrari, Tiziana, 40033 Casalecchio di Reno (BO) (IT)
(74) Representative: Modiano, Micaela Nadia

(57) **Abstract**

An automated device for producing formalin, comprising at least one heated chamber (2) that is suitable to dissolve in water, with a catalyst, a solid polymer of formaldehyde, the chamber (2) having at least one intake port (4) for desalinized dissolution water and at least one discharge port (8) for concentrated formalin, the discharge port (8) leading to the inlet (11) of at least one tank (12) for dilution and storage of the formalin down to the chosen concentration, the dilution and storage tank (12) having a discharge outlet (17) that is connected to means (18) for withdrawal of the formalin by users.

## Description

The present invention relates to an automated device for producing formalin, i.e., an aqueous solution of formaldehyde.

Among other uses, formalin is currently used in the analysis laboratories of hospital and veterinary clinics and of research and testing facilities as a fixative, i.e., as a chemical product that is adapted to preserve anatomical and histological specimens to be observed under the microscope, and wherever it is necessary to sanitize environments, as an effective antiseptic and disinfectant.

It is known that diluted or concentrated formalin is usually purchased in large amounts by laboratories or by the other facilities in which it is used, so as to deal with day-to-day requirements of use without running the risk of depletion. Accordingly, formalin is usually collected, directly by the manufacturer, in cans, which are then stored by their users in appropriately provided stores located proximate to the laboratories.

However, this practice, which is now widespread in all laboratories, is not free from drawbacks. First of all, it is in fact known that formalin is a toxic and carcinogenic substance and therefore storing it in large quantities can cause potential dangers and harm to the health of laboratory workers.

Secondly, commercially available formalin inevitably undergoes more or less prolonged aging in stores before it is actually used in the laboratory: it has been observed experimentally in more than one occasion that formalin that is no longer fresh from production can cause drawbacks (for example formalin pigment) in its use in the histological and immunohistochemical fields, and that many protocols require the use of formalin that has been freshly prepared from paraformaldehyde.

Another advantage of the use of freshly prepared formalin is the possibility to avoid, as often required in the fields cited above, the use of methanol (methyl alcohol), which is instead present in commercial formalin as a stabilizing agent.

The aim of the present invention is to obviate the above-cited drawbacks, by providing an automated device for producing formalin that allows to provide laboratory workers, in each instance, with the amount of formalin that is strictly necessary, so that it is freshly produced at the time of use and does not need to be stored for long periods of time.

Within this aim, an object of the present invention is to provide an automated device for producing formalin in a laboratory that is simple, easy and versatile in use, in safe conditions for the operator.

Another object of the present invention is to provide an automated device for producing formalin in a laboratory that can operate continuously in a fully autonomous manner, without requiring the intervention of specialized workers.

Another object of the present invention is to provide a device that is simple, relatively easy to provide in practice, safe in use, effective in operation, and has a relatively low cost.

This aim and these and other objects that will become better apparent hereinafter are achieved by the present automated device for producing formalin, characterized in that it comprises at least one heated chamber that is suitable to dissolve in water, with a catalyst, a solid polymer of formaldehyde, said chamber having at least one intake port for desalinized dissolution water and at least one discharge port for concentrated formalin, said discharge port leading to the inlet of at least one tank for dilution and storage of the formalin down to the chosen concentration, said dilution and storage tank having a discharge outlet that is connected to means for withdrawal of the formalin by users.

More particularly, the device comprises a hermetic outer shell, which is kept in partial vacuum by a suction system even when access to the withdrawal means for the operator is opened. The aspirated vapors are then effectively bubbled through in a tank that contains an appropriate solution of sodium bisulfite, which eliminates any gaseous formaldehyde that is present, forming a compound that has a very low environmental impact. The cleaned air is partly released into the environment through a filter that is capable of eliminating any residual formaldehyde. In this manner, there is no transfer of formaldehyde from the device to the external environment.

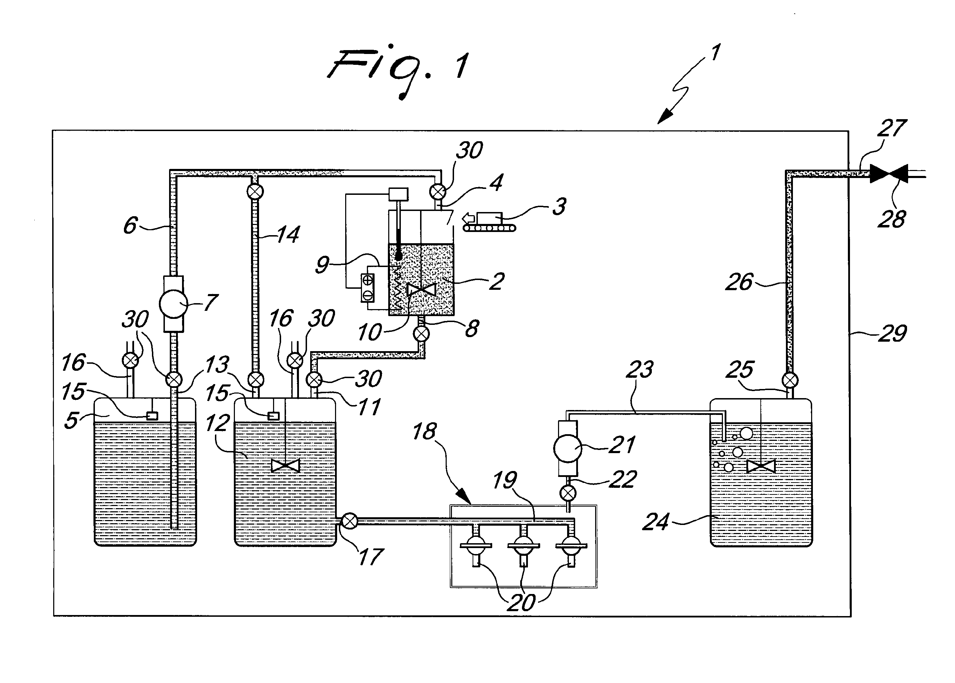

Further characteristics and advantages will become better apparent from the following detailed description of a preferred but not exclusive embodiment of an automated device for producing formalin according to the invention, illustrated by way of non-limiting example in the accompanying drawing, wherein the only figure is a schematic view of a device according to the invention.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With particular reference to the figure, the reference numeral 1 generally designates an automated device for producing formalin according to the invention.

The device can be installed easily in any laboratory, hospital or research facility that uses every day, even in variable quantities, formalin as a fixative or antiseptic agent, said formalin being usually used in a 4% aqueous solution but also in more concentrated form.

The device comprises at least one heated chamber 2 for dissolving in water a solid polymer of formaldehyde, which in the specific case is constituted by paraformaldehyde, in the presence of a suitable alkaline catalyst: said catalyst is preferably constituted by trisodium phosphate dodecahydrate (Na₃PO₄.12H₂O) and/or by another salt suitable for this use.

The chamber 2 is associated with an automatic device 3 for feeding the reagents (paraformaldehyde and trisodium phosphate dodecahydrate) and has a respective intake port 4, which is connected to a desalinized water tank 5 or an equivalent device, which supplies water at ambient temperature by means of an appropriate duct 6, and a pump 7. The chamber 2 is further provided with a discharge port 8, which is arranged on the bottom, with at least one heating element 9, and with one or more mechanical agitators 10. The heating element 9 is constituted by elements that are internal with respect to the chamber 2, such as immersion heaters (of the chemically resistant type), or external elements, such as heating strips or coils, and is controlled by a respective thermostat or by a temperature limiting device, which are coupled if necessary.

The discharge port 8 of the chamber 2 is connected to an inlet 11 of a tank 12 for storing and diluting the formalin to the concentration required by its users. Further, the dilution and storage tank 12 is affected by an auxiliary inlet 13, which is connected, by means of a branch of the duct 14, directly to the first tank 5 of desalinized water. Advantageously, the tanks 5 and 12 are provided with gravimetric or volumetric electronic means 15 for controlling the level of the liquid inside them, and with at least one safety valve 16 for venting or introducing air.

The storage and dilution tank 12 is affected by a discharge outlet 17, which is connected to means 18 for the withdrawal of the formalin by its users. The withdrawal means 18 are preferably constituted by a terminal duct 19, which leads to a plurality of faucets 20 of the manually- or electrically-operated type or of another equivalent type. Advantageously, the faucets 20 are differentiated by different flow-rate values, which are suitable for the withdrawal of different volumes of formalin on the part of the user. If appropriate, a single faucet with a programmable flow-rate can replace the three faucets.

Partial vacuum generation elements 21, suitable to avoid the dispersion of gaseous formaldehyde into the environment, are provided at the formalin withdrawal faucets 20. In particular, said elements are constituted by a suitable vacuum pump, which is installed so that its intake duct 22 is connected to the faucets 20, while the delivery duct 23 leads to an elimination tank 24, which contains a suitable solution of sodium sulfite: any dispersed gaseous formaldehyde is thus conveyed into the elimination tank 24, where it is effectively eliminated by chemical reaction. The vapors aspirated by the partial vacuum generation elements 21 are conveyed into the elimination tank 24, where the formaldehyde is made to react effectively. The elimination tank 24, by means of an outlet 25 and a channel 26, is connected to the outside by means of a vent 27 and a high-efficiency filter 28 of the activated-charcoal type, which prevents any residues of formaldehyde from reaching the environment.

A check valve or equivalent device for preventing the solution from being aspirated is fitted on the delivery duct 23.

The device is advantageously enclosed in a hermetic container 29 made of stainless steel, which is kept in partial vacuum by the partial vacuum generation elements 21 even when the withdrawal means 18 are opened to the user. All the duct portions that are present in the device are provided with respective one-way or two-way valves 30 and, when necessary, with pumping means for circulating the liquids.

Each component of the device is controlled by a unit for controlling the formalin production process, which is not shown in the figures for the sake of simplicity in comprehension.

The formalin in the intended concentration is generated in the device described above with the method that follows. The water for dissolving the paraformaldehyde, taken from the desalinized water tank 5 at ambient temperature, is transferred to the chamber 2 through the intake port 4 until it is filled partially with the intended preset amount of water. This amount is dosed with the electronic control means 15 inside the chamber or with external systems for dosing the volume of added desalinized water. At this point, the mechanical agitators 10, actuated by the control unit, start to operate.

The dissolution water is then heated, by activating the heating elements 9, to a temperature of approximately 80°C: once heating has been completed, the paraformaldehyde and the trisodium phosphate dodecahydrate are introduced in the chamber 2, by means of the feeder 3, in preset amounts. If it is economically convenient, it is possible to use paraformaldehyde that has a low degree of polymerization, which is soluble in water, without having to modify the device in any way. The addition can occur by means of a belt feeder, which conveys packets of paraformaldehyde having a preset mass to the intake port 4 of the chamber 2, or by means of a single container of paraformaldehyde by way of a star-type dosage device or of a dosage screw feeder, which add the intended quantity of paraformaldehyde in the chamber. The action of the mechanical agitators 10 produces a milky dispersion of the paraformaldehyde powder, which in these conditions depolymerizes into formaldehyde and rapidly dissolves: the result, in this step, is a clear solution of formalin, concentrated up to approximately 40%.

The concentrated formalin is conveyed, by means of the controlled opening of the corresponding valve, from the discharge port 8 of the chamber 2 to the inlet 11 of the dilution and storage tank 12. Dilution water at ambient temperature, taken from the desalinized water tank 5, is then introduced in the dilution and storage tank 12: said dilution water is first conveyed through the heated chamber 2, in order to wash away the residues of concentrated formalin solution, inside which it receives the addition, if necessary, of monosodium phosphate (NaH₂PO₄) or of another appropriate salt or acid, in order to buffer the formalin to an approximately neutral pH. The formalin at the intended concentration is thus retained inside the dilution and storage tank 12 at ambient temperature, and can be drawn at any time and in the chosen quantity by acting on the faucets 20, which are supplied with different flow-rates that are suitable for drawing different volumes of product and are provided by electromagnetic or peristaltic dosage pumps and with Teflon or stainless steel pipes.

It should be noted that when the content of the dilution and storage tank 12 is halved as a consequence of repeated withdrawals of formalin from the faucets 20, the control unit activates an acoustic and/or luminous signal in order to indicate that it is necessary to resupply the device with paraformaldehyde and distilled water. It is also possible to insert a separate alarm for the distilled water, which is connected to a level indicator in the desalinized water tank 5. The elimination tank 24 also can contain a sensor that is capable of reporting the imminent depletion of the sodium bisulfite, allowing to take appropriate steps in time and thus maintain efficiency in eliminating formaldehyde.

It has thus been shown that the device according to the invention achieves the proposed aim and objects.

The fully automated device is capable of ensuring the production of formalin directly in a laboratory, in the amounts strictly required in each case, and rapidly, effectively and cheaply. The installation of the device according to the invention therefore allows to avoid the potentially dangerous periodic storage of large volumes of formalin and to reduce drastically the risks for the operator.

The invention thus conceived is susceptible of numerous modifications and variations, all of which are within the scope of the appended claims; in particular, it should be noted that it is possible to vary easily its production capacity depending on the requirements of the user by acting on the dimensions of the components.

An alternative embodiment of the device according to the invention uses trioxane instead of paraformaldehyde as a solid polymer of formaldehyde. This provides a first advantage to the present solution, since trioxane, which like paraformaldehyde depolymerizes in a hot water solution, in the presence of a catalyst, has a lower toxicity than paraformaldehyde.

All the details may be replaced with other technically equivalent ones.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An automated device for producing formalin, **characterized in that** it comprises at least one heated chamber (2) that is suitable to dissolve in water, with a catalyst, a solid polymer of formaldehyde, said chamber (2) having at least one intake port (4) for desalinized dissolution water and at least one discharge port (8) for concentrated formalin, said discharge port (8) leading to the inlet (11) of at least one tank (12) for dilution and storage of the formalin down to the chosen concentration, said dilution and storage tank (12) having a discharge outlet (17) that is connected to means (18) for withdrawal of the formalin by users.

2. The device according to claim 1, **characterized in that** said intake port (4) of said chamber (2) is connected to at least one desalinized water tank (5).

3. The device according to claims 1 and 2, **characterized in that** said chamber (2) is provided with at least one heating element (9) with thermostatic control and with at least one mechanical agitator (10).

4. The device according to one or more of the preceding claims, **characterized in that** said dilution and storage tank (12) is provided with at least one safety valve (16) for venting or for introducing air.

5. The device according to one or more of the preceding claims, **characterized in that** said dilution and storage tank (12) is provided with electronic means (15) for controlling the level of the liquid.

6. The device according to one or more of the preceding claims, **characterized in that** it comprises at least one tank (24) for eliminating formaldehyde, which is provided with at least one internal safety valve (16) and with at least one external vent (27), which is provided with at least one filter (28) of the activated-charcoal type in order to eliminate permanently any residues of gaseous formaldehyde.

7. The device according to one or more of the preceding claims, **characterized in that** said means (18) for drawing the formalin are associated with partial vacuum generation elements (21) so as to avoid the dispersion of gaseous formaldehyde in the environment.

8. The device according to one or more of the preceding claims, **characterized in that** said partial vacuum generation elements (21) are constituted by at least one vacuum pump in which the intake duct (22) is connected to said withdrawal means (18) and the delivery duct (23) leads to said elimination tank (24).

9. The device according to one or more of the preceding claims, **characterized in that** said withdrawal means (18) comprise at least one terminal duct (19), which is controlled by a pump and leads to a plurality of faucets (20).

10. The device according to one or more of the preceding "claims, **characterized in that** said faucets (20) have mutually different flow-rates in order to allow the withdrawal of different volumes of formalin.

11. The device according to one or more of the preceding claims, **characterized in that** said solid polymer of formaldehyde is constituted by paraformaldehyde.

12. The device according to claim 11, **characterized in that** said catalyst is constituted by trisodium phosphate dodecahydrate.

13. The device according to claim 11, **characterized in that** said catalyst is constituted by an electrolyte that is suitable to reach an alkaline pH.

14. The device according to one or more of claims 1 to 10, **characterized in that** said solid polymer of formaldehyde is constituted by trioxane saying.

15. An automated method for generating formalin according to one or more of claims 1 to 13, **characterized in that** it comprises the steps of:
dissolving formaldehyde by means of desalinized water;
conveying dissolution water into said chamber (2);
heating the dissolution water to 80°C and mechanically agitating it;
adding the paraformaldehyde to the dissolution water;
adding trisodium phosphate dodecahydrate to the dissolution water;
agitating vigorously in order to produce a milky dispersion of the particles, so as to obtain formalin with a concentration of substantially 40%;
conveying the concentrated formalin into said dilution and storage tank (12);
conveying dilution water drawn from said desalinized water tank (5) through said heated chamber (2);
adding, in said chamber (2), monosodium phosphate to the dilution water;
conveying the dilution water from said chamber (2) into said tank (12) in order to obtain formalin at the chosen concentration and buffered to a neutral pH.
